Europäisches Patentamt

European Patent Office

Office européen des brevets

(11) Publication number: **0 060 571**
**B1**

(12) **EUROPEAN PATENT SPECIFICATION**

(45) Date of publication of patent specification: **28.08.85**

(51) Int. Cl.⁴: **G 11 B 15/66**

(21) Application number: **82103558.1**

(22) Date of filing: **27.04.82**

(54) Web threading apparatus.

<table>
<tr><td>

(30) Priority: **26.10.81 US 315120**

(43) Date of publication of application:
**22.09.82 Bulletin 82/38**

(45) Publication of the grant of the patent:
**28.08.85 Bulletin 85/35**

(84) Designated Contracting States:
**DE FR GB**

(56) References cited:
**GB-A-1 167 445**
**US-A-3 195 792**
**US-A-3 195 825**
**US-A-3 244 378**
**US-A-3 421 672**

</td><td>

(73) Proprietor: **International Business Machines Corporation**
**Old Orchard Road**
**Armonk, N.Y. 10504 (US)**

(72) Inventor: **Godsoe, Robert James**
**11225 East Prince Road**
**Tucson Arizona 85717 (US)**
Inventor: **Wenner, Jack William**
**1810 North Campbell Avenue**
**Tucson Arizona 85719 (US)**

(74) Representative: **Gasslander, Sten**
**IBM Svenska AB Box 962**
**S-181 09 Lidingö (SE)**

</td></tr>
</table>

Courier Press, Leamington Spa, England.

## Description

This invention relates to web threading apparatus for moving the leading end of a flexible web wrapped on a supply reel over a web path from a first position adjacent the supply reel to a second position on a take-up reel for subsequent rotational movement with the take-up reel.

Automatic threading systems have been widely used in the feeding of web material from a supply reel to a take-up reel. The present invention can be applied to any web transport apparatus provided with a flexible web, although the present invention is described herein with respect to a magnetic tape apparatus.

Techniques have been developed for automatically threading a web material from a supply reel to a take-up reel in order to overcome the problems encountered when a length of the web had to be extracted from the supply reel and threaded through the different stations of the drive by an operator. The end of the web must then be attached by some appropriate means to the take-up reel. In a typical prior art automatic threading system, a piece of leader tape is permanently attached to the take-up reel. The leader tape is threaded through the tape drive to a position near the supply reel. The supply reel typically has a connector which could be simply and quickly connected to the trailing end of the leader tape of the take-up reel. The leader tape and the coupling device then becomes the substrate for the subsequent wraps of the web. The leader tape and especially the connector cause a problem in that creases could be formed in the subsequent layers which could ruin the subsequent re-use of the tape since the magnetic transitions might occur at the creases. This made the resensing of the magnetic transitions haphazard at best. The take-up reel could be adapted to accommodate the leader tape and the coupling device and thereby provide a smooth surface for the subsequent layers of tape (see, for example, US—A—3244378).

Slides were then adapted to push a leader block from the supply reel to the take-up reel (see, for example, US—A—3421672 and US—A—3195792). The take-up reel could be adapted to accommodate the leader block and thereby provide a desired smooth surface for subsequent layers of the magnetic tape, for instance. The slides and levers had the problem in that only very simplistic tape paths could be covered. Further, the distance between the supply reel and the take-up reel had, of necessity, to be very short because the slides and hooks could not cover any complex tape path.

In copending patent applications EP—0042986 and EP—0042989, apparatus is disclosed with a channel formed to coincide approximately with the path of tape through a tape drive. The remaining section of the channel completes the path for the endless band that is disposed for sliding engagement within the channel. Suitable means are provided to drive the band within the channel in a forward and reverse direction. The channel and the band are located in a plane different from the plane produced by the tape as it moves from its supply reel to the take-up reel. A threading pin is provided for attaching a coupling device attached to the tape to the band in the channel. Sliding the band within the channel causes the coupling device to be pulled along the path as determined by the channel to thread the tape from the supply reel to the take-up reel.

An object of the present invention is to eliminate the need for a continuous endless sliding band and the structure and mechanism to operate it.

A further object of the present invention is to provide a simple mechanism for moving the leading end of a web from a supply reel to a take-up reel.

A more specific object of the invention is to provide a threading device that does not require an external force to accomplish the threading of a web through a complex web threading path.

Accordingly, the invention is characterised by an elongated spiral spring whose one end is secured to the take-up reel at a position displaced from the web position on the take-up reel, and whose other end is secured to a spool for containing a spirally wound supply of the spring, a device on the axis of the spool adapted to couple to the leading end of the web at the first position, a channel defining a track adjacent and parallel to the web path to guide the spool and device between the first and second positions, and latch means to hold the spool at the first position and actuatable to release the spool after coupling of the device to the leading end of the web, whereby the spring draws the spool, device and leading end of the web to the take-up reel.

In accordance with an embodiment of the present invention, a tape threading device uses an elongated spiral spring wrapped around a spool that includes a pick-up pin for picking up the leader block to withdraw the tape from the supply reel. A latch holds the spool during a supply reel loading and unloading operation. A channel guides the spool and pick-up pin from the supply reel to the take-up reel. The spool, located at the pick-up pin end of the spring, is then rotated by the spring to wind the spring upon the spool, while pulling the leader block along the channel. The pick-up pin places the leader block firmly within the take-up reel with the leader block forming a part of the take-up reel to provide a desired smooth substrate for the subsequent layers of the tape.

In the preferred embodiment according to the present invention, a constant force spring can be used of a thin flexible band of material. When the latch is released, the spring will wrap around the spool and draw the pin and the tape from the supply reel along a channel that threads the tape onto the hub of the take-up reel. The spring provides the force for drawing the tape from the supply reel to the take-up reel. In rewinding, the supply reel is driven to rewind the tape which, through the pick-up pin, unwinds the constant force spring from its spool and places the spool back into the latch for subsequent operation. In operation, a cartridge with a supply reel, tape and leader block is inserted into the threading system so that the leader block is attached to the pick-up pin. The latch holding the pick-up pin is released allowing the constant force spring to start to wrap around the spool and pull the leader block and the tape from the supply reel along the channel through the tape path. The leader block enters into a recess of the take-up reel hub. The leader block is formed to provide a smooth surface for the winding of the tape onto the take-up reel hub. Because the pick-up pin is placed within the take-up reel at the centre of rotation of the take-up reel, the pick-up pin can stay in constant contact with the leader block during the winding operation. Upon withdrawing the tape from the take-up reel, the winding of the tape onto the supply reel pulls the leader block together with the pick-up pin and the spool back along the channel into contact with the latch which holds the pick-up pin in place. The supply reel can then be removed from the tape drive releasing the latch to hold the spool and pick-up pin in place for the next supply reel.

The scope of the present invention is defined by the appended claims; and how it can be carried into effect is hereinafter particularly described with reference to the accompanying drawings, in which:—

FIGURE 1 is a perspective view of a reel-to-reel magnetic tape drive having an automatic tape threading apparatus according to the present invention;

FIGURE 2 is a schematic elevational view partly in section of the drive shown in Figure 1; and

FIGURE 3 illustrates the coupling involved in connecting the leader block with the tape to the threading apparatus.

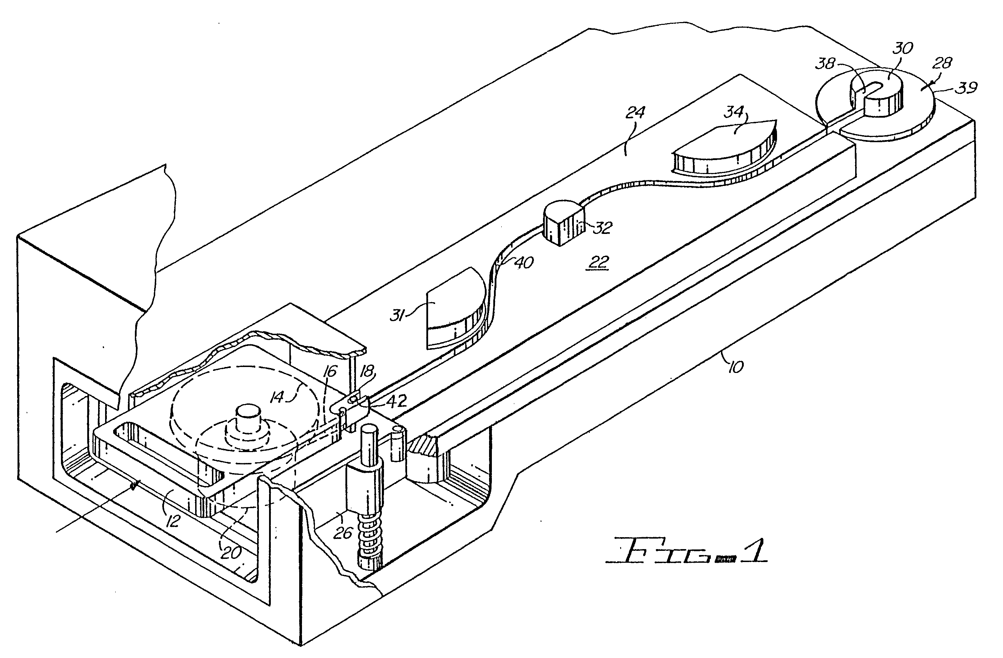

A reel-to-reel type magnetic tape drive apparatus (Figure 1) includes tape threading apparatus according to the present invention, and tape transport apparatus similar to that disclosed in EP—0042986. The apparatus includes a base plate 10 on which various components are mounted. A replaceable supply cartridge 12 includes a reel 14 of magnetic tape 16 whose leading edge is attached to the side of leader block 18 disposed externally of the cartridge. The cartridge 12 can be inserted into the apparatus onto a spring-loaded loader platform 26. A drive motor 20 for the supply reel 14 is mounted beneath the loader platform 26 on the base plate 10 so that its shaft extends normal to the surface and slightly below the surface of the platform in its raised position. The motor shaft is provided with a suitable clutching arrangement which permits the motor to be coupled to the hub of the supply reel 14 by movement of the cartridge 12 and loader platform 26 in a direction normal to the surface.

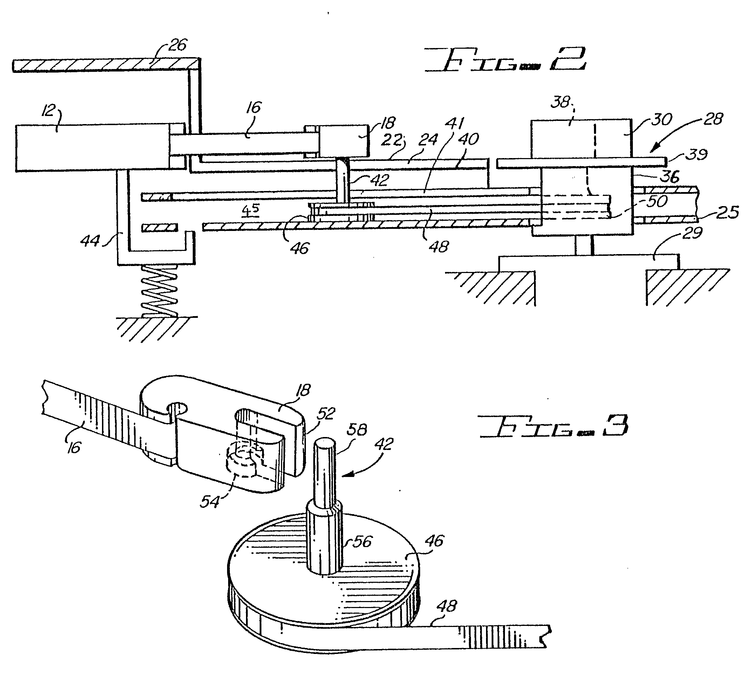

A take-up reel 28 is permanently attached to the shaft of a motor 29 (Figure 2) mounted on the base plate 10. Between the take-up reel 28 and the cartridge lies a channel block 24 in which a channel 40 defines and is parallel to and spaced from a tape threading path. The block 24 has an upper surface 22. When the cartridge and loader platform are lowered to couple the supply reel 14 to its motor 20, the reel 14 lies in substantially the same plane as a hub 30 of the take-up reel 28 so that when tape 16 is transported above the surface 22, a point on the tape moves in a plane normal to both motor shafts. The tape 16 is threaded between the supply reel 14 and the take-up reel 28 past an air bearing tape guide 31, a magnetic transducer head 32, and a second air bearing tape guide 34.

Thereafter, transport of the tape for reeling, unreeling and transducing is achieved by control of the respective driving motors of the reels as is well known in the art for reel-to-reel tape drives. The tape guides 31 and 34 are positioned in relation to the tape path so that the uncoded side of the magnetic tape 16 slides over their air bearing surfaces with the magnetic pigment side of the magnetic tape 16 coacting with the magnetic head 32 to read and write magnetic transitions to and from the magnetic tape 16.

The specific details of these components form no part of the present invention, and they have not been illustrated or described in detail. The details of the shape of the leader block 18, the construction of the hub 30 of the take-up reel 28, and the relationships of these elements to each other, is disclosed in copending application No. EP—0042986. The hub 30 of the take-up reel has a radially extending slot 38 to receive the leader block 18 which is permanently attached to the end of the tape 16 on the supply reel 14. The relationship is such that when the leader block 18 is inserted into the slot 38 by movement of the leader block in a radial direction, the tape 16 attached thereto is positioned to be wrapped on the hub 30 by merely rotating the take-up reel 28, because the length of the slot 38 corresponds generally to the length of the leader block 18. During the winding process, the leader block 18 is maintained in the slot 38. The automatic threading apparatus disclosed in application No. EP—0042986 generally provides two functions. The first involves moving and guiding a coupling device from the supply reel to the take-up reel, and the second involves selectively coupling the leader block at the supply reel in a manner to permit the leader block to be rotated with the take-up reel without being uncoupled from the threading apparatus.

The automatic threading apparatus of the present invention performs the same two general functions. Figure 2 is highly diagrammatic and many parts of the tape drive have been omitted to avoid obscuring the invention.

For this purpose, a passage block 25 is located on top of the base plate 10 below the channel block 24. In the top of the block 25 is a channel 41 (Figure 2) aligned with and below the channel 40. Between the top and bottom of the block 25 is a passage 45 in which a spool 46 is slidable below the channels 40 and 41. The take-up reel 28 includes a flange 39 below the hub 30 and level with the surface 22. Below the flange 39, the reel 28 has an extension 36 which extends through apertures in the top and bottom of the block 25.

The spool 46 carries at its centre of rotation a threading pin 42 which extends upwardly parallel to the motor shafts through the channels 40 and 41. The lower portion 56 (Figure 3) of the pin 42 is of greater diameter than the upper portion 58. The leader block 18 has a radial cutout section 52 forming a recess into which the smaller diameter upper portion 58 of the pin 42 can pass radially. The block 18 also has a large diameter recess 54 into which the larger diameter lower portion 56 of the pin 42 can pass axially. The portion 56 of the pin 42 cannot pass through the cutout section 52 of the block 18.

Around the spool 46 are spirally wound the turns of an elongated resilient means which tends to wind up upon the spool. The elongated resilient means is in the form of a constant force spring, such as a negator spring 48. The spring is a thin band of resilient material such as is used to make clock springs. The free end of the spring 48 is secured to the extension 31 of the take-up reel 28 (Figure 2) in a recess 50 which is shaped to receive the spool 46 and is connected to the slot 38, so that the pin 42 may be located on the axis of rotation of the reel 28.

The spool 46 is held by a releasable latch 44 with the spring 48 extending along the passage 45 and the pin 42 in position to receive the leader block 18 of a cartridge 12 inserted into the apparatus upon the raised loader platform 26.

When a cartridge 12 is so inserted, the upper portion 58 of the pin 42 enters the recess 52 in the leader block 18 until the larger lower portion 56 is aligned with and below the recess 54. The cartridge 12 and platform 26 are then lowered to engage the recess 54 upon the portion 56 of the pin 42. When this has occurred, the latch 44 (Figure 2) is actuated and releases the spool 46 carrying the threading pin 42 at its centre of rotation. When the spool 46 is released by the latch 44, the negator spring 48 starts to wind upon the spool 46 and applies a constant pressure to urge the spool through the passage 45 towards the take-up reel 28. Because the lower portion 56 of the pin 42 is secured in the recess 54 of the leader block 18, the latter is drawn away from the cartridge together with the tape 16 which unwinds from the supply reel 14. The spool 46 and pin 42 are guided by the channels 40 and 41 through which the pin 42 extends. Thus the magnetic tape 16 is drawn along the correct tape path past the air bearing guide 31, the magnetic head 32, and the air bearing guide 34 to the take-up reel 28. As the negator spring 48 winds up, it rotates the spool 46 and the pin 42 rotates in the recesses 52 and 54 of the leader block 18. When the take-up reel 28 is reached, the leader block 18 nestles within the cutout 38 while the spool 46 nestles within the cutout 50 of the take-up reel 28. The pin 42 is at the centre of rotation of the take-up reel.

The motor 29 is then actuated to rotate the take-up spool 28 to wind the magnetic tape 16 onto the hub 30. The threading pin 42 remains seated in the leader block 18 during the rotation of the take-up reel 28.

For a rewinding operation, the motors 20 and 29 are rotated in a standard manner for a reel-to-reel drive to replace the tape 16 onto the supply reel 18 under the correct tension as is well known in reel-to-reel tape drive operation. At the last wrap of tape around the hub 30, the leader block 18 is pulled from the cutout 38. The leader block 18 pulls the threading in 42 and the spool 46 back through the channels 40 and 41 and passage 50. The spool 46 rotates as the negator spring 48 unwinds. When all the magnetic tape 16 is wound onto the supply reel 14 and the leader block 18 is adjacent to the cartridge 12, the spool 46 is in position to be captured by the latch 44. As the cartridge 12 and loader platform 26 rise, the latch 42 is urged upward and engages the spool 46 ready for the insertion of the next cartridge. Subsequently, the lower portion of pin 42 disengages from recess 54 to allow removal of the cartridge.

It will be appreciated that many modifications to the described embodiment may be made without departing from the scope of the invention as claimed. For example, other means for effecting vertical movement of the cartridge may be used. Different methods of latching the spool may be used, as may other methods of interconnecting the tape to the threader. The tape path may be varied, as may the disposition and numbers of the air bearing guides. Whilst the spool must be offset from the tape path, a shorter threading pin could be used if it were located, for example, within the channel block. In this case an additional dependent pin could be used to guide the spool along its path.

**Claims**

1. Web threading apparatus for moving the leading end of a flexible web (16) wrapped on a supply reel (14) over a web path from a first position adjacent the supply reel to a second position on a take-up reel (28) for subsequent rotational movement with the take-up reel, characterized by an elongated spiral spring (48) whose one end is secured to the take-up reel at a position displaced from the web position on the take-up reel, and whose other end is secured to a spool (46) for containing a spirally wound supply of the spring, a device (42) on the axis of the spool adapted to couple to the leading end of the web at the first position, a channel (40) defining a track adjacent and parallel to the web path to guide the spool and device between the first and second positions, and latch means (44) to hold the spool at the first position and actuatable to release the spool after coupling of the device to the leading end of the web, whereby the spring draws the spool, device and leading end of the web to the take-up reel.

2. Apparatus according to claim 1, in which the spring is a constant force spring.

3. Apparatus according to claim 1, in which the supply reel is replaceable and a leader block (18) is attached to the leading end of the web, the device (42) being adapted to be selectively coupled to the leader block.

4. Apparatus according to claim 3, in which the device is a threading pin having a thinner diameter section (58) to pass into a slot (52) in the leader block (18) and a larger diameter section (56) that is engageable in a recess (54) at the end of the slot of the leader block for selective coupling between the device and the leader block upon relative axial motion therebetween.

5. Apparatus according to claim 3 or 4, in which the web and supply reel are enclosed in a replaceable cartridge (12).

6. Apparatus according to any preceding claim, in which the web of material is a magnetic tape.

7. Apparatus according to any preceding claim, in which the take-up reel has a recess (50) into which the spool enters in the second position, so that the spool and take-up reel are co-axial.

**Patentansprüche**

1. Bandeinfädelvorrichtung zur Bewegung des Vorderendes eines auf eine Abwickelspule (14) gewickelten biegsamen Bandes (16) längs einer Bandbahn von einer ersten Stelle im Bereich der Abwickelspule zu einer zweiten Stelle auf einer Aufwickelspule (28) für eine nachfolgende Drehbewegung mit der Aufwickelspule, gekennzeichnet durch eine lange Spiralfeder (48), deren eines Ende an der Aufwickelspule an einer gegenüber der Bandstelle auf der Aufwickelspule versetzten Stelle befestigt ist und deren anderes Ende an einem Spulenkörper (46) zur Aufnahme eines spiralig gewickelten Vorrats der Feder befestigt ist, eine Vorrichtung (42) auf der Achse des Spulenkörpers, welche für eine Verbindung mit dem Vorderende des Bandes an der ersten Stelle eingerichtet ist, einen eine zur Bandbahn benachbarte und parallele Führungsbahn bestimmenden Kanal (40) zur Führung von Spulenkörper und Vorrichtung zwischen der ersten und der zweiten Stelle, und Verriegelungsmittel (44) zum Halten des Spulenkörpers an der ersten Stelle und welche den Spulenkörper nach dem Verbinden der Vorrichtung mit dem Vorderende des Bandes freigebend betätigbar sind, wodurch die Feder den Spulenkörper, die Vorrichtung und das Vorderende des Bandes zur Aufwickelspule zieht.

2. Vorrichtung nach Anspruch 1, bei welcher die Feder eine Konstantkraftfeder ist.

3. Vorrichtung nach Anspruch 1, bei welcher die Abwickelspule austauschbar und ein Führungsblock (18) am Vorderende des Bandes angebracht ist, wobei die Vorrichtung (42) für ein ausgewähltes Verbinden mit dem Führungsblock eingerichtet ist.

4. Vorrichtung nach Anspruch 3, bei welcher die Vorrichtung ein Fädelstift ist, welcher einen Abschnitt (58) mit dünnerem Durchmesser für ein Einführen in einen Schlitz (52) des Führungsblocks (18) und einen Abschnitt (56) mit größerem Durchmesser aufweist, welcher in eine Ausnehmung (54) am Ende des Schlitzes des Führungsblocks für ein ausgewähltes Verbinden zwischen der Vorrichtung und dem Führungsblock bei einer relativen Axialbewegung zwischen diesen eingreifen kann.

5. Vorrichtung nach Anspruch 3 oder 4, bei welcher das Band und die Abwickelspule in einer auswechselbaren Kassette (12) eingeschlossen sind.

6. Vorrichtung nach irgendeinem vorstehenden Anspruch, bei welcher das Band ein Magnetband ist.

7. Vorrichtung nach irgendeinem vorstehenden Anspruch, bei welcher die Aufwickelspule eine Ausnehmung (50) aufweist, in welche der Spulenkörper an der zweiten Stelle eintritt, derart, daß Spulenkörper und Aufwickelspule koaxial sind.

**Revendications**

1. Dispositif d'enfilement de bande servant à déplacer l'extrémité avant d'une bande flexible (16) enroulée sur une bobine réceptrice (14) sur un trajet de ruban, d'une première position adjacente à la bobine débitrice à une deuxième position située sur la bobine réceptrice (28) pour qu'elle soit ensuite entraînée en rotation avec la bobine réceptrice, caractérisé par un ressort spiral de grande longueur (48) dont une extrémité est fixée à la bobine réceptrice, dans une position espacée de la position de la bande sur la bobine réceptrice, et dont l'autre extrémité est fixée à un tambour (46) destiné à contenir une réserve de ressort enroulée en spirale, un dispositif (42) prévu sur l'axe du tambour et adapté pour s'accoupler à l'extrémité avant de la bande dans la première position, un couloir (40) qui définit une piste adjacente et parallèle au trajet de la bande pour guider le tambour et le dispositif entre la première et la deuxième positions et des moyens de verrouillage (44) servant à maintenir le tambour dans la première position et qui peuvent être actionnés pour libérer le tambour, lorsque le dispositif a été accouplé à l'extrémité avant de la bande, de manière que le ressort tire le tambour, le dispositif et l'extrémité avant de la bande jusqu'à la bobine réceptrice.

2. Dispositif selon la revendication 1, dans lequel le ressort est un ressort à force constante.

3. Dispositif selon la revendication 1, dans lequel la bobine réceptrice est interchangeable et le bloc amorce (18) est attaché à l'extrémité de la tête de la bande, le dispositif (42) étant adapté pour pouvoir être sélectivement accouplé au bloc amorce.

4. Dispositif selon la revendication 3, dans lequel le dispositif est un doigt d'enfilement possédant une section (58) de plus petit diamètre destiné à s'engager dans une fente (52) du bloc amorce (18) et une section (56) de plus grand diamètre qui peut se mettre en prise dans une cavité (54) située à l'extrémité de la fente du bloc amorce pour assurer un accouplement sélectif entre le dispositif et le bloc amorce lorsqu'il se produit un déplacement axial relatif entre ces deux éléments.

5. Dispositif selon la revendication 3 ou 4, dans lequel la bande et la bobine débitrice sont enfermées dans une cartouche interchangeable (12).

6. Dispositif selon une revendication précédente quelconque, dans lequel la bande de matière est un ruban magnétique.

7. Dispositif selon une revendication précédente quelconque, dans lequel la bobine réceptrice présente un évidement (50) dans lequel le tambour s'engage dans la deuxième position, de manière que le tambour et la bobine réceptrice soient coaxiaux.

FIG. 1

FIG-2

FIG-3

0 060 571